# EUROPEAN PATENT SPECIFICATION

(11) **EP 1 851 962 B1**
(45) Date of publication and mention of the grant of the patent: **14.11.2012**
(21) Application number: 06735271.6
(22) Date of filing: 16.02.2006
(51) Int. Cl.: H04N 7/173, H04N 7/16, H04N 5/00, H04N 7/24

(54) **METHODS AND APPARATUS FOR DELIVERING SERVICES**
VERFAHREN UND ANORDNUNGEN ZUM AUSRICHTEN VON DIENSTEN
PROCEDES ET DISPOSITIFS DE FOURNITURE DE SERVICES

(30) Priority: 16.02.2005 US 653569 P
(43) Date of publication of application: 07.11.2007
(73) Proprietor: NMS Communications Corporation, Farmingham MA 01702 (US)
(72) Inventor: KATZ, Michael, Westford, Massachusetts 01886 (US); BISHOP, Wendell E., East Falmouth, Massachusetts 02536 (US); BASSO, Andrea, Ocean, New Jersey 07712 (US)
(74) Representative: Palmer, Jonathan R.
(86) International application number: PCT/US2006/005520
(87) International publication number: WO 2006/089052

(56) References cited:
- EP-A2- 1 633 120
- WO-A1-00/57646
- US-A1- 2003 093 801
- US-A1- 2004 034 864
- US-A1- 2004 181 813
- KARCZEWICZ M ET AL: "The SP- and SI-frames design for H.264/AVC" IEEE TRANSACTIONS ON CIRCUITS AND SYSTEMS FOR VIDEO TECHNOLOGY, IEEE SERVICE CENTER, PISCATAWAY, NJ, US LNKD- DOI:10.1109/TCSVT.2003.814969, vol. 13, no. 7, 1 July 2003 (2003-07-01), pages 637-644, XP011099256 ISSN: 1051-8215
- JENNEHAG U ET AL: "Increasing bandwidth utilization in next generation iptv networks" IMAGE PROCESSING, 2004. ICIP '04. 2004 INTERNATIONAL CONFERENCE ON SINGAPORE 24-27 OCT. 2004, PISCATAWAY, NJ, USA,IEEE LNKD- DOI:10.1109/ICIP.2004.1421493, vol. 3, 24 October 2004 (2004-10-24), pages 2075-2078, XP010786181 ISBN: 978-0-7803-8554-2

## Description

### BACKGROUND

In a media services environment, users receive a multitude of video services via a user display device. Often, the user display device is a personal communications device such as a cellular phone, palm pilot or personal digital assistant (PDA). The user device is operable to render a video signal from a service provider for display to a user, and may be responsive to a variety of transmission mediums, including wireless, broadband, digital subscriber line (DSL) and others.

The video services often emanate from different service provider applications, and are switched to the active user stream by a switching mechanism at the service provider. For example, a typical user may have available options includes video mail, stock tickers, interactive video games, current motion picture trailers, traffic, news, and others. An active user may wish to switch rapidly between the different streams provided by the various service provider applications, such as applications transmitting so-called "3G24M video," as is known in the art. Accordingly, many user devices offer a user interface operable for "point-and-click" type selection of the various video streams available from network application services.

US 2004/0034864 discloses arrangements for seamless channel changing in a digital-television-based entertainment network, by providing an intra frame to a client device upon a change to a new channel, even when the video data is previously compressed on a macroblock basis.

EP 1 633 120 discusses the switching of image coded data. In response to a display image switching request, a conversion server intraframe-codes the decoded image data of an image that will be used after the switching and transmits the intraframe coded data.

### SUMMARY

The invention provides a method of delivering video services as set out in claim 1, a method of switching a video stream as set out in claim 11, a video portal as set out in claim 12, a computer program product as set out in claim 18, and a video enabled personal communications device as set out in claim 19.

Users often receive video services from a video portal in communication with various video service applications. In a conventional video portal providing video services to users, a plurality of video service applications (media sources) provide a media stream to a user display device and allow on-demand switching from the different media sources to a user feed rendered on the user device. The typical user device includes cell phones, laptops, PDAs, desktop PCs, or other computing device enabled for personal communications. Such media sources are typically video and may include, for example, video mail, interactive video games, movie trailers, or other video or multimedia applications.

Unfortunately, conventional media stream delivery mechanisms suffer from the shortcoming that media stream switching introduces periods of undefined or unintelligible frames into the user delivery path. While it may not affect the functional delivery of the conventional video stream, such a delay, typically observable as a "blip" of blank, undefined, or unintelligible screens, at the very least interrupts the user experience and introduces a delay that prevents a seamless switching of video streams. In a user delivery device, such as a handheld mobile phone or other personal communications device, users expect an ability to perform frequent, immediate switching between incoming media streams, typically video. Delays of even a brief interval tend to become annoying and objectionable when a user desires to flip between a plurality of video streams in succession.

Accordingly, configurations of the invention are based, in part, on the observation that conventional video service users tend to experience an objectionable delay or "blip" when switching between video services. In particular, users of frame based services, such as conventional video on demand, observe a delay or period of unintelligible displayed images upon switching from a particular video stream to another video stream. Configurations discussed herein substantially overcome the above described shortcomings by maintaining a decoded display frame of the requested video stream and delivering the display frame for rendering on a user device immediately upon a request from the user. Conventional end user video switching devices do not maintain a display image of incoming streams but rather pass through the video stream directly to the user.

In a conventional video stream, successive frames are often similar to a previous frame, and need not include information about unchanged portions. In other words, such frames only need include information pertaining to changed portions, or pixels, of the corresponding display screen. Conventional video streams avoid replicating duplicative information between frames by transmitting a base, or complete, frame representing every pixel in the display image, followed by a relative frame including only the changed portions of the display image. Such a sequence including a base, or I-frame, followed by a series of relative, or P-frames, is called a segment and recurs periodically as the displayed image changes. However, the relative frames assume the context established by previous relative and base frames. Conventional devices, therefore, are unable to deliver a coherent image until the next base frame (I-Frame). Unless the user request arrives at the exact moment as a new base frame, for example, the requested stream cannot be merged (a process called concatenation) with the user delivery stream until the next base frame. It is computationally expensive to maintain a renderable (encoded) frame of each potential stream, and merely switching the relative frames renders them unintelligible without the corresponding base frame.

Therefore, configurations herein accumulate a display frame, or current image, representing the most recent base frame and successive relative frames for each of a plurality of anticipated video streams. Upon receipt of a switching request from a user, the display frame corresponding to the requested stream is encoded and transmitted to a user for rendering on the display device. Each of the anticipated video streams is decoded as successive relative frames are received, thus maintaining a current display image corresponding to each of the anticipated streams. Upon the user request, the particular stream is deliverable in a seamless manner because only the requested video stream is encoded. The system need not encode each of the anticipated media streams pending a request from a user. Since decoding is computationally less expensive than encoding, a video compositor accumulating the anticipated streams decodes each stream upon receipt, and only encodes in response to a user request.

In a typical video media stream therefore, a complete base frame (I-frame) is periodically received, every 5-10 seconds for example, followed by interim relative frames (P-frame) for the remaining frames in a segment of frames until the next complete I-frame. Conventional mechanisms cannot interpret the intervening P-frames intelligibly without the corresponding I frames. Therefore, simply switching the user feed to the requested video stream results in garbled or unintelligible P-frames until the next I frame.

In contrast, configurations herein perform decoding on each anticipated stream to maintain a display frame indicative of each I-frame and aggregated P-frames. The current display frame is encoded as a base or I-frame and transmitted to a user in response to a video stream request. Successive relative frames (P-frames) are applied (decoded) to the current display image, and an interim stream of new P-frames (referenced to the newly created I-frame) is immediately (real time) encoded and sent to the user, until the next I-frame is received, at which point the user feed is switched to the incoming stream for receipt of successive (already encoded) frames that are simply fed through, thus concatenating the interim stream with the requested stream. The end user device (i.e. cell phone) is then operable to decode and display the I-frame and successive P-frames. In this manner, the video switching and compositing device need only assign an encoder to requested streams for the remaining frames in a segment until the next I- frame is received. Since the switching and compositing device need only perform encoding for incomplete I-frame segments, encoders may be switched as needed among requesting users for providing a realtime viewing experience.

Similarly, other media forms, such as audio, may also experience an unsatisfactory "blip" or interruption when switching between services. In contrast, the method disclosed herein provides a way to switch between services, or between internal media (e.g. menus) and services, that is relatively instantaneous from the user's perspective, but also results in minimal degradation of video quality, and places minimal load on portal system resources. The method involves having a video portal keep active sessions (continuous video) from various 'live feed' services available at all times, continuously decoding the video stream from each of those services, and encoding the video stream from each service for only a brief period at the beginning of a session a user requests connection to the service.

Without the portal as disclosed herein, the user must establish separate sessions (phone calls) with different services. With such a portal, only a single session is established between the user and the portal in order to make available multiple services. The portal, as an agent of the user, is operable to establish a separate conventional session per user with each service application only at the time of a user request to connect. This session establishment (using telephony calling protocols and H.245) takes considerable time, and injects an objectionable delay in the interaction with the user. The disclosed method avoids this delay by having sessions pre-established with each of the services.

In further detail, the method of delivering video services as disclosed herein includes identifying a media stream having a plurality of segments, in which each of the segments is defined by an ordered sequence of frames, and receiving a request to direct the identified media stream to a requesting user, such that the request is received during a current segment in the stream. A video portal operable according to configurations discussed herein redirects the media stream to the user in a realtime manner by providing frames remaining in the current segment, and concatenating the provided frames with a successive next segment of the media stream.

The video portal switches the media stream in a manner that preserves synchronization between an existing display image at a user display device and the redirected media stream. In the exemplary configuration, the portal generates relative frames corresponding to the switched media stream for the remainder of a current segment, in which the relative frames complement a complete frame in the current segment.

Configurations discussed herein are operable with a user display device operable to render a visual image from an encoded frame, in which encoding incurs greater resources than decoding. Such user display devices include, for example, wireless phones, PDAs, WiFi enabled laptops, wired PCs, or any suitable video enabled personal communication device. Rendering further includes computing a displayable image from a complete frame and at least zero relative frames of the media stream, since a switch may occur at an initial I-frame (complete frame, as discussed herein) or any successive P-frame (relative frames, as discussed herein). Thus, the received frames include complete frames and relative frames, the relative frames indicative of changes from a previous frame, wherein a display image includes a complete frame and a sequence of at least zero relative frames.

In the exemplary configuration, the video portal redirects the requested video stream by aggregating received frames in the media stream to maintain a current frame, and decodes each of the aggregated frames to generate a renderable frame. A compositor receives successive relative frames from the media stream, and computes the difference between the relative frame and the renderable frame. The compositor generates interim frames (P-frames) indicative of the difference between the relative frame and the renderable frame for rendering an accurate depiction of the switched media stream on the user device. Computing the difference further includes decoding the successive relative frame, and applying the decoded relative frame to a renderable image indicative of a current display state of the media stream. The compositor invokes an encoder to encode the renderable image to generate a relative frame indicative of changes between the renderable image and the current display state.

In the exemplary configuration, redirecting the media stream further includes receiving each of the frames in a segment, and aggregating the frames to maintain a display frame corresponding to a display image. The video portal generates an interim image from the display frame, and receives successive relative frames indicative of incremental changes to the display image.

Redirecting, in the exemplary arrangement, further includes receiving a request to redirect the media stream to a user, and computing a current frame indicative of each of the frames in the sequence received for the current segment. The video portal immediately sends the computed current frame to the user in a seamless manner for rendering on a user display device, such that the seamless manner is operable to preserve synchronization of the display image with the computed current frame. The compositor receives the remaining frames in the current segment, and computes, for each received frame, changes contained therein. The compositor then computes the difference between the computed current frame and the computed changes in a relative frame (P-frame), and transmits the computed difference to the user display device for rendering on the user display device.

To perform the switchover, in the exemplary arrangement, the compositor accumulates successive relative frames to maintain the current frame, such that generating interim frames occurs upon receiving a request for delivery of the media stream, in which the request arrives in the middle of a segment.

The exemplary compositor receives a plurality of media streams, and maintaining a current image of each of the plurality of media streams, in which maintaining including decoding a current frame of each of the received media stream in anticipation of a switch request. Upon receiving such a request, the media portal switches a selected one of the plurality of media streams in response to the received request, such that switching is performed by rendering the current frame corresponding to the selected media stream, and concatenates the switched media stream to an existing user media stream without loss of synchronization on the user display device.

In the exemplary arrangement, switching further includes computing a current display frame based on the successive relative frames applied to the display image, and computing changes between the computed current display frame and the generated interim image. The compositor encodes a relative frame indicative of the computed changes, such that the relative frame is operable to render the interim images similar to the display image from the media source. A media switcher then transmits the encoded relative frame to a user device for rendering, such that rendering is operable to display the display frame including the aggregated frames in the segment.

Alternate configurations of the invention include a multiprogramming or multiprocessing computerized device such as a workstation, handheld or laptop computer or dedicated computing device or the like configured with software and/or circuitry (e.g., a processor as summarized above) to process any or all of the method operations disclosed herein as embodiments of the invention. Still other embodiments of the invention include software programs such as a Java Virtual Machine and/or an operating system that can operate alone or in conjunction with each other with a multiprocessing computerized device to perform the method embodiment steps and operations summarized above and disclosed in detail below. One such embodiment comprises a computer program product that has a computer-readable medium including computer program logic encoded thereon that, when performed in a multiprocessing computerized device having a coupling of a memory and a processor, programs the processor to perform the operations disclosed herein as embodiments of the invention to carry out data access requests. Such arrangements of the invention are typically provided as software, code and/or other data (e.g., data structures) arranged or encoded on a computer readable medium such as an optical medium (e.g., CD-ROM), floppy or hard disk or other medium such as firmware or microcode in one or more ROM or RAM or PROM chips, field programmable gate arrays (FPGAs) or as an Application Specific Integrated Circuit (ASIC). The software or firmware or other such configurations can be installed onto the computerized device (e.g., during operating system or execution environment installation) to cause the computerized device to perform the techniques explained herein as embodiments of the invention.

### BRIEF DESCRIPTION OF THE DRAWINGS

The foregoing and other objects, features and advantages of the invention will be apparent from the following description of particular embodiments of the invention, as illustrated in the accompanying drawings in which like reference characters refer to the same parts throughout the different views. The drawings are not necessarily to scale, emphasis instead being placed upon illustrating the principles of the invention.
Fig. 1 is a context diagram of an exemplary managed information environment 100 having media streams suitable for use with the present invention;
Fig. 2 is a flowchart of media stream operations the environment of Fig. 1;
Fig. 3 is a block diagram of media stream processing as disclosed in the flowchart of Fig. 2;
Fig. 4 is a data flow diagram depicting information flow in the media stream in Fig. 3; and
Figs. 5-9 are a flow chart of media streams from multiple sources as depicted in Figs. 3 and 4.

### DETAILED DESCRIPTION

Configurations herein accumulate a display frame including the base frame and successive relative frames, indicative of a current image, for each of a plurality of anticipated video streams. Upon a request from a user, the display frame corresponding to the requested stream is encoded and transmitted to a user for rendering on the display device. Each of the anticipated video streams is decoded as successive relative frames are received from the corresponding video stream, thus maintaining a display image corresponding to each of the anticipated streams. Upon receipt of a user request, the particular stream is deliverable in a seamless manner because only the requested video stream is encoded. The system need not encode each of the anticipated media streams pending a request from a user. Since decoding is computationally less expensive than encoding, a video compositor accumulating the anticipated streams decodes each stream upon receipt, and only encodes in response to a user request.

A video feed from a service application to a user display device, or terminal, is typically in the form of an H.263, MPEG4, or H.264 video stream. Configurations herein typically employ a live feed in the same format as the active session from the user to the portal. However, multiple live feeds with different standards from the same service may be used, if necessary, to handle users with different terminal types. Such streams typically have periodic I-frames (every 5-10 seconds) with many P-frames between any two I-frames. An I-frame is where the stream 'starts from scratch', and a P-frame uses knowledge of what came before in the stream (back to the previous I-frame). A user switched into an already active service at an arbitrary time would receive P-frames for a period of possibly several seconds until the next I-frame arrives. During that time, the video image would be highly degraded. This provides an unacceptable user experience. Configurations disclosed herein avoid this degradation by starting the stream from a new service application with an initial I-frame.

Alternatively, in conventional mechanisms, the connection of a user to a new service can be delayed until the next I-frame from that service arrives. This does not inject degraded video into the stream to the user, but does cause a delay of possibly many seconds before the connection can be made. This delay is objectionable and to be avoided as well. The exemplary arrangement herein avoids this delay by starting with the most recent frame from the corresponding video service application, whether I-frame or P-frame.

Another conventional alternative is to buffer all frames from each service application between one I-frame and the next, and to start video to the user with the 'old' I-frame from the service. The entire successive stream must be delayed by the period between the arrival of the old I-frame and the current frame. This results in an immediate connection to the user, but the video that the user sees is delayed from that which is sent by the service, by up to several seconds. For some services, this may be an acceptable user experience. For other services, especially those for which a single user may interact with the service application itself to cause a change of the video feed, the delay in the stream appears as a delay in response to user input, which is also objectionable and to be avoided. The disclosed video portal avoids this delay by not buffering any data from the service applications, but only working with the most recent frame from each.

Yet another conventional alternative is to decode the video feed from each service at all times, and as a new user requests service, to assign a conventional encoder to that user in order to start encoding the stream to that user on demand. The stream would then continue to be encoded for that user for the duration of the connection. The typical portal may connect to only a few service applications, but may service many users. Video decoding consumes significantly fewer processing resources than does video encoding. Running a decoder continuously for each service application is thus acceptable. However, running an encoder continuously for each user is very costly. Furthermore, there is some video quality degradation in decoding and re-encoding a video stream, versus simply passing through the stream from the service application to the user as is. The configuration discussed below avoids the extra cost of processing resources, and the video degradation, by only assigning an encoder to a user for a brief period at the beginning of a stream from a new service application. A system with many users may use statistical sharing of a few encoding resources across many users if each user consumes an encoding resource for only a small fraction of the total session.

According to configurations discussed further below, the video portal (portal) will pre-establish connections with a set of available service applications. In some cases, where a user needs a private session with a service application (video mail, for instance) the portal may pre-establish one or more sessions, and as users consume those sessions, pre-establish additional sessions such that there is always a session ready to go without requiring session setup time when a user decides to connect. For each pre-established session, a video decoder will be assigned and active. For each decoder, each input frame from a service application will be decoded as soon as possible (in real time within a frame period, as portal resources allow), and only the most recently decoded frame (in bit map or pixel form) will be retained. In the idle state, before any users ask for connection to service applications, no encoding resources will be assigned - no service application streams will be re-encoded.

For each user that chooses to connect to a particular service application, the following applies. (For multiple users to either the same or different service applications, the following applies to each user. For a user who accesses multiple service applications successively, the following applies to each access.) An encoder is assigned and immediately encodes the most recently stored pixel (decoded) frame for the service application into an I-frame that is immediately sent to the user. Then for each subsequent frame received as input from the service application, there is first a check to see whether it is an I-frame or a P-frame. If it is an I-frame, the encoder is shut down and released, the I-frame is forwarded along as is to the user, and all subsequent frames on that channel, whether P-frames or I-frames, are forwarded through as is to the user. If instead it is a P-frame, the frame is decoded as usual, and the output of the decoder is fed to the input of the encoder, which is requested to produce a P-frame that is then sent on to the user.

In this fashion, an encoder will only be assigned for a brief period (few seconds) at the beginning of a connection to a new service application, until the next input I-frame arrives. During that period, there will be some minimal video degradation from re-coding, and there will be extra consumption of resources due to use of the encoder. But for the major portion of the connection, there will be no video degradation and no extra use of resources.

Note that while an encoder is active for a given user, the decoding of frames for the service application continues undisturbed. If the service application has a live feed that may be shared (broadcast), a second or more subsequent users may be attached using the same set of decoded frames. Only a new encoder needs to be assigned per user.

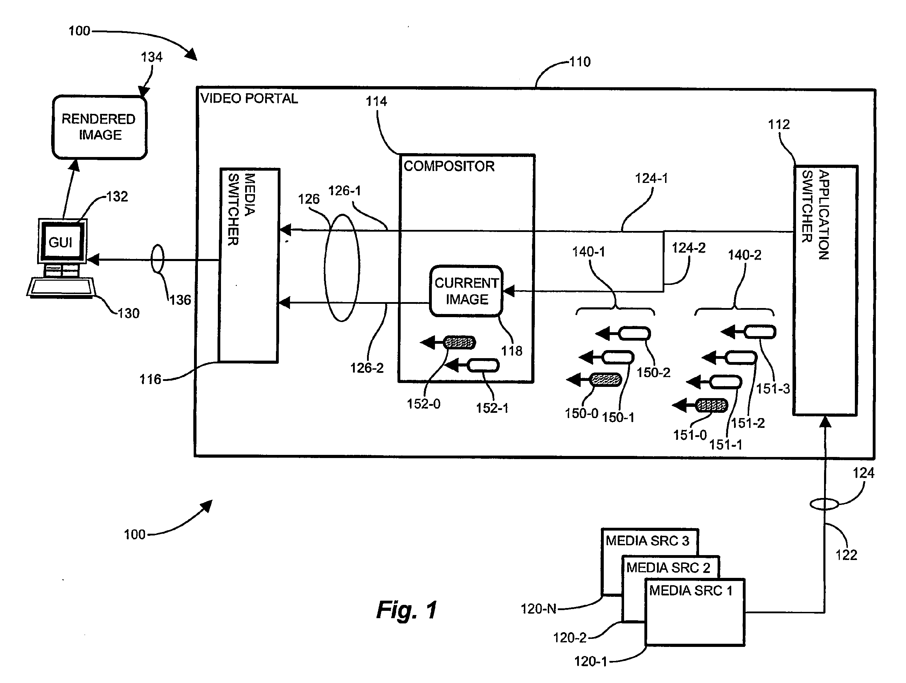

Fig. 1 is a context diagram of an exemplary managed information environment 100 having media streams suitable for use with the present invention. Referring to Fig. 1, the managed information environment 100 includes a video portal 110 connected to a plurality of media sources 120-1..120-N (120 generally) and operable to deliver the media sources 120 to a user display device 130 (user device), such as a cellular phone, personal computer (PC), laptop, personal digital assistant (PDA) or other wired or wireless personal communication device. The user device 130 has a graphical user interface 132 for presenting a rendered image 134 from a user feed 136 supplied by the video portal 110. Note that the user feed 136 may represent an intra-device interface, as the video portal 110 may be co-located in the user device 130. Alternatively, the user feed may represent a local wired connection, local wireless (WiFi) connection, or any suitable multimedia interface. Similarly, the media sources 120 connect to a media interface 122 such as a wired or wireless internet connection, typically from a video service provider (not specifically shown) or other suitable interconnection to a video service, discussed further below.

The video portal 110, therefore, interconnects with a plurality of incoming video sources 120-N for selectively directing the video sources to the user device 130 as a rendered image. The video portal 110 includes an application switcher 112, for selecting media streams 124 from the various media sources 122, a compositor 114 for performing seamless concatenation of the media streams, discussed further below, and a media switcher 116, for assigning a renderable media stream 126 to the user feed 136 for rendering (display) on the user device 130.

The media streams 124 each include a plurality of segments 140-1, 140-2 (140 generally) each having a sequence of frames 150-0..152-N. Each segment 140 includes a first complete frame 150-0, 151-0 and 152-0 optionally followed by one or more relative frames 150-1..150-N, 151-1..151-N, 152-1..152-N. In the discussion that follows herein, the 0^{th} frame is the complete, or I-frame, and successive (1+N) frames are relative, or P-frames, N being 0 or greater, for the frame sequence 150, 151 and 152. Each of the complete frames 150-0 represents a complete pixel definition of a visible display image, and the successive relative frames 150-1..150-N represent changes to the previous complete frame 150-0. In other words, each relative frame, say 150-5 for example, represents changes to the aggregation of frames 150-0 through 150-4.

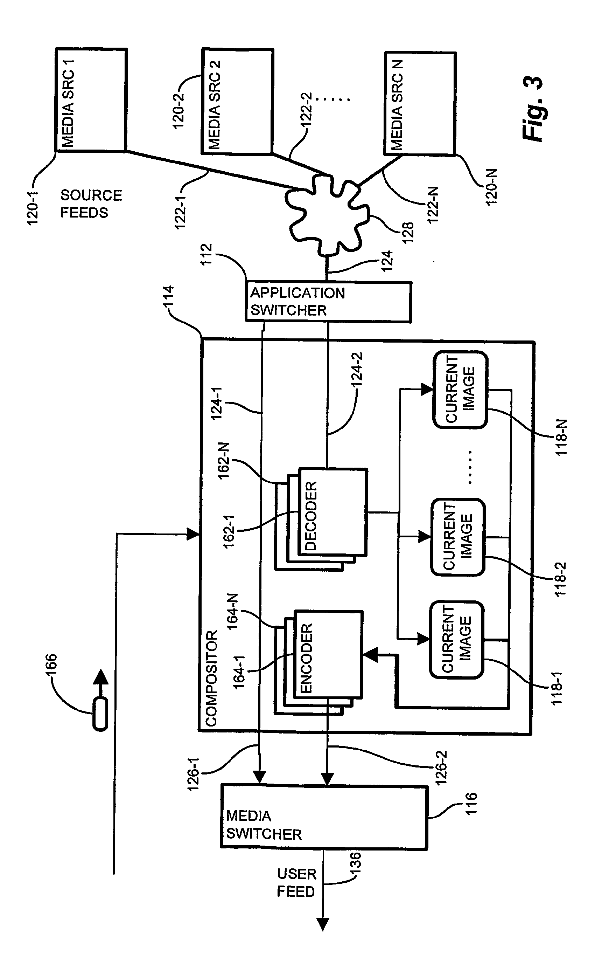

In configurations discussed herein, the compositor 114 maintains a current image 118 representing the current state of the image encompassing each received frame 150 in a particular media stream 124-2, typically a video stream. This video stream 124-2 represents a seamless video stream operable to be immediately rendered to the user according to principles discussed further below. The compositor 114 also receives and passes through a direct feed 124-1. As indicated above, the media switcher 116 switches various video feeds 126 to the user feed 136. However, a switchover in the middle of a segment 140 presents seamlessness issues discussed further below. Accordingly, the compositor 114 maintains the current image 118 of a media stream 124-2 indicative of complete 150-0 and relative frames 150-(1+N) received up until the point a switchover is requested. In this manner, the current image 118 is encoded as a complete frame 152-0, renderable as the rendered image 134, immediately upon receipt of a switchover command 166 (Fig. 3) from the user device. The compositor 114 is further operable to deliver relative frames 152-(1+N) from the maintained media stream 124-2 for the remainder of the segment 140-1, at which point the complete image 151-0 of the successive segment may be switched, or fed through as the unprocessed media stream 124-1.

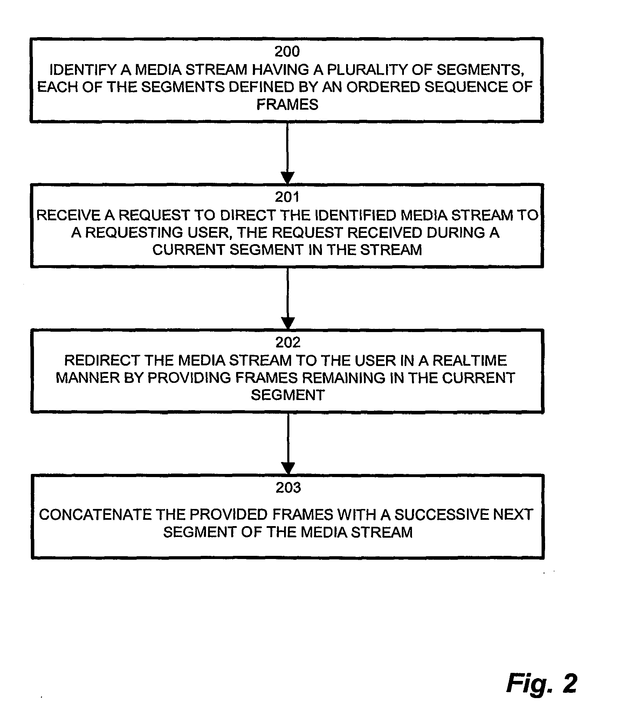

Fig. 2 is a flowchart of media stream operations the environment of Fig. 1. Referring to Figs. 1 and 2, the method of delivering video services as disclosed herein includes, at step 200, identifying a media stream 124 having a plurality of segments 140, in which each of the segments 140 is defined by an ordered sequence of frames 150-N. Typically a user receives a new segment every 5-10 seconds, such as a new scene in the video image. Each segment 140 begins with a complete frame 150-0, or I-frame, followed by a series of relative frames 150-(1+N), or P-frames, defining changes to the image 118, for the remainder of the segment. At step 201, the video portal 110 receives a request 166 to direct the identified media stream 124 to a requesting user, such that the request is received during a current segment 140 in the stream 124. The request is typically a user request from the user device 130, such as a icon or button to select the stream 124. In response, the media portal redirects the media stream 124 to the user device 130 in a realtime manner by providing frames 150-N remaining in the current segment 140. The frames 150-N are interim frames provided for the remainder of the segment because they relate not to the initial I frame 150-0 in the segment but to the I frame 152-0 representative of the current image 118 delivered as the first frame of the redirected stream 124-2. At the conclusion of the current segment 140, the video portal 110 concatenates the provided frames 152 with a successive next segment 140 of the media stream 124-1. The media switcher 116 delivers the next complete frame 151-0 (I-frame) from the selected media stream 124-1 to the user feed 136, thus concatenating or merging the interim video stream 126-2 with the main feed of the media stream 124-1. Therefore, the compositor 114 need only deliver the interim stream 126-2 for the remainder of the current segment 140-1. As will be discussed further below, this switching frees up encoding resources after the switchover is complete, thus enabling the encoder (164, Fig. 3) to attend to other switching requests.

Fig. 3 is a block diagram of media stream 124 processing as disclosed in the flowchart of Fig. 2. Referring to Figs. 1 and 3, the compositor 114 in the video portal 110 is shown in greater detail. The compositor 114 includes a plurality of current images 118-1..118-N, each corresponding to an incoming media stream 122-1..122-N. The compositor also includes one or more decoders 162-1..162-N (162 generally), one or more encoders 164-1..164-N, operable to decode and encode frames 150 in the media streams 124. The current images 118 are decoded pixel based forms operable for rendering on a user device 130. Therefore, the current images 118 are operable to represent (store) an image including a complete frame 150-0 and a series of successive relative frames 150-(1+N). In other words, the current image 118 stores aggregate information from a particular video stream 124 sufficient to render the image corresponding to the most recently received frame, whether it is a complete or relative frame.

The decoders 162 are operable to receive an incoming media stream 124 from a media source 120, and decode, or interpret, the information therein into a renderable frame in the current image 118. The incoming media streams 124 emanate from a variety of media sources 120, typical video service applications, and may arrive over the network 128 via a variety of transport mechanism, such as IP, GSM, CDMA, TDMA, broadband, DSL or any suitable packet switched transport mechanism. In the media stream 124, the encoded relative frames 150-(1+N) are not renderable without the information contained in the previous complete frame 150-0 and intervening relative frames in the corresponding segment. The encoder 164 is operable to encode the current image 118 and transmit it via the user feed 136 to the user for rendering on the user device 130. Therefore, when a video switch request 166 arrives from the user device, the encoder 164 is operable to seamlessly encode the current image 118-N for the requested media stream 124-2 and transmit it to the user device 130, A corresponding relative frame in the media stream 124-1 emanating from the corresponding media source 120 would be unrenderable on its own, and the user device 130 would be forced to wait for the next complete frame or perform alternate interim processing to accommodate the request, typically resulting in an unacceptable user experience.

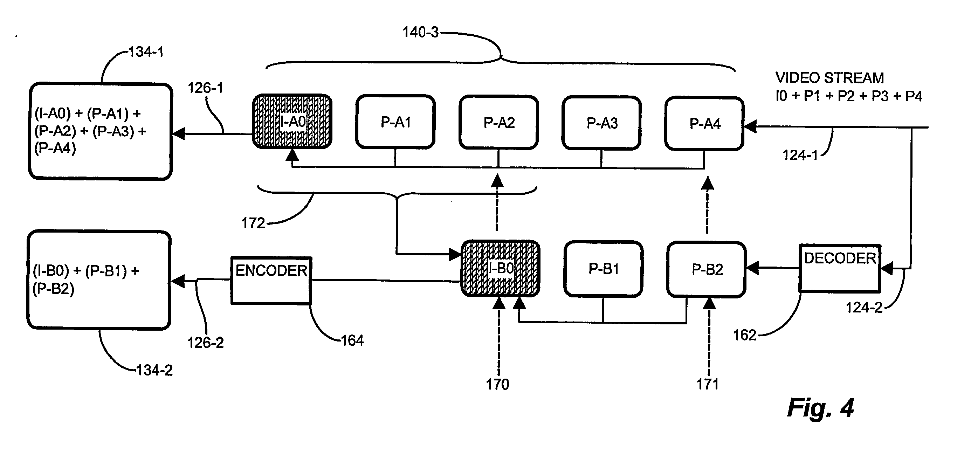

Fig. 4 is a data flow diagram depicting information flow in the media stream in Fig. 3. Referring to Figs. 3 and 4, a rendered image 134-1 and 134-2 corresponding to media streams 124-1 and 124-2, respectively, switched by the compositor 114 are shown. Fig. 4 shows the relationship between segments, complete frames (I-frames) and relative frames (P-frames) as employed in the exemplary configuration. A direct feed video stream 124-1 has a segment 140-3 of frames including complete frame 1-A0 and relative frames P-A1..P-A4. A seamless incoming video stream 124-2 switched according to principles herein defines the same video stream fed to the decoder 162. The decoded frames 150 are maintained as a current image 118 in complete frame I-B0 at a time of a user request 170, having been previously decoded from frames I- AO, P-A1 and P- A2, shown by bracket 172. At the time of the user request 170, the unswitched video stream 124-1 has received frames I- AO, representing a complete image, and relative frames P-A1 and P-A2. Accordingly, the rendered image 134-1 displays an image indicative of information in frames I-AO + P-A1 + P- A2. Stream 124-2, being processed for seamless switchover according to principles herein, had decoded frames I-AO, P-A1 and P-A2 as current image I-BO. Accordingly, frame I-BO represents the aggregated information contained in frames I-AO, P-A1 and P-A2, shown by bracket 172. Accordingly, at switchover time 170 the encoder 164 receives complete frame I-BO and encodes a complete frame as a renderable image 134-2. Successive relative frames in the segment 140-3 are received and decoded as relative frames P-B1 and P-B2, containing the same information as frames P-A3 and P-A4, applicable to rendered image 134-1. Therefore, at time 171, the rendered images 134-1 and 134-2 are equivalent, and include aggregated information from frames I-AO + P-A1 + P-A2 + P- A3 + P-A4 and frames I-BO + P-B1 + P-B2, respectively.

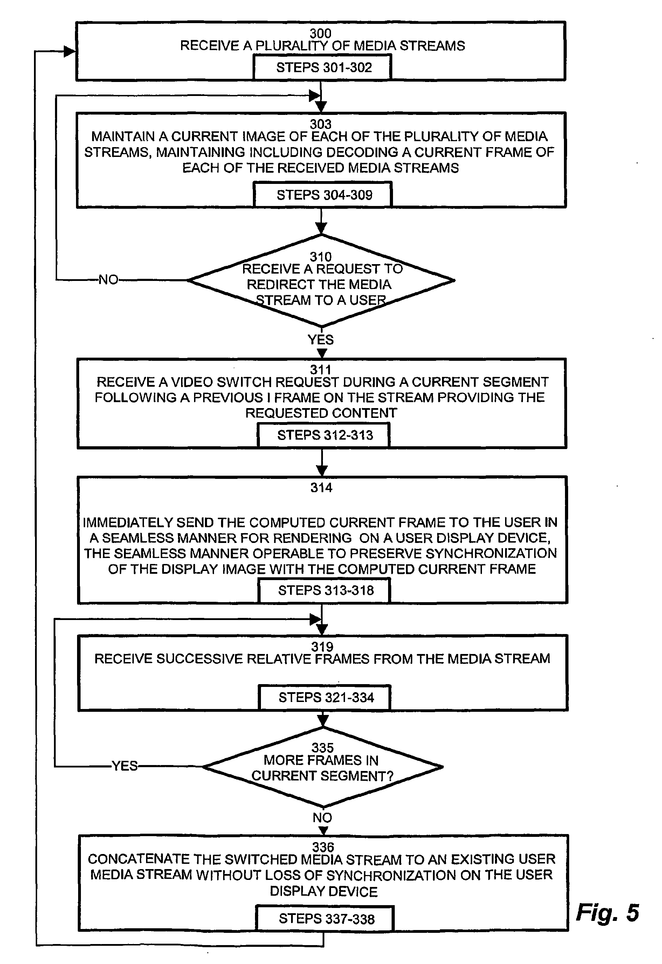

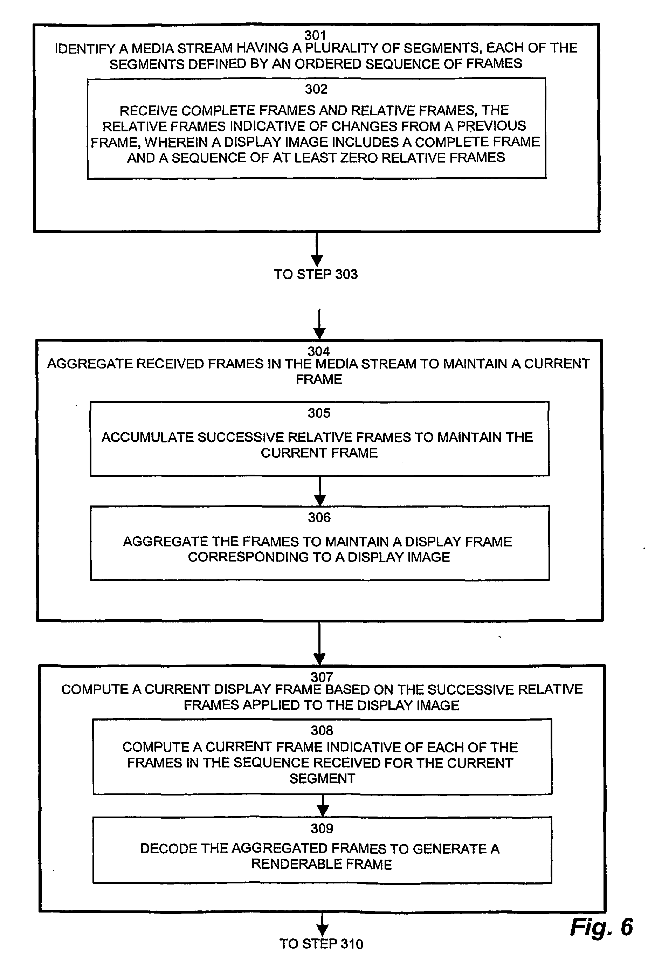

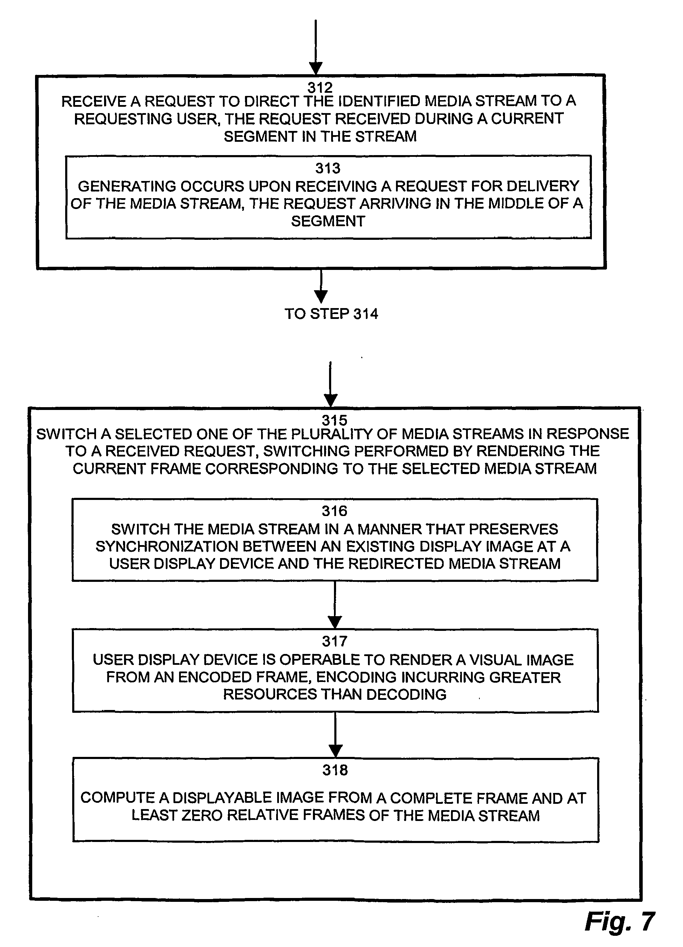

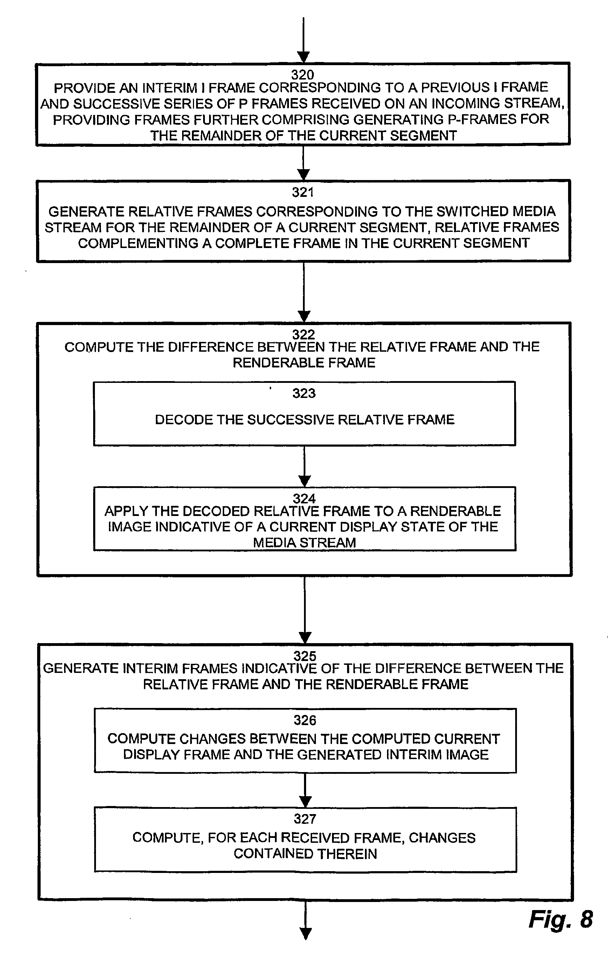

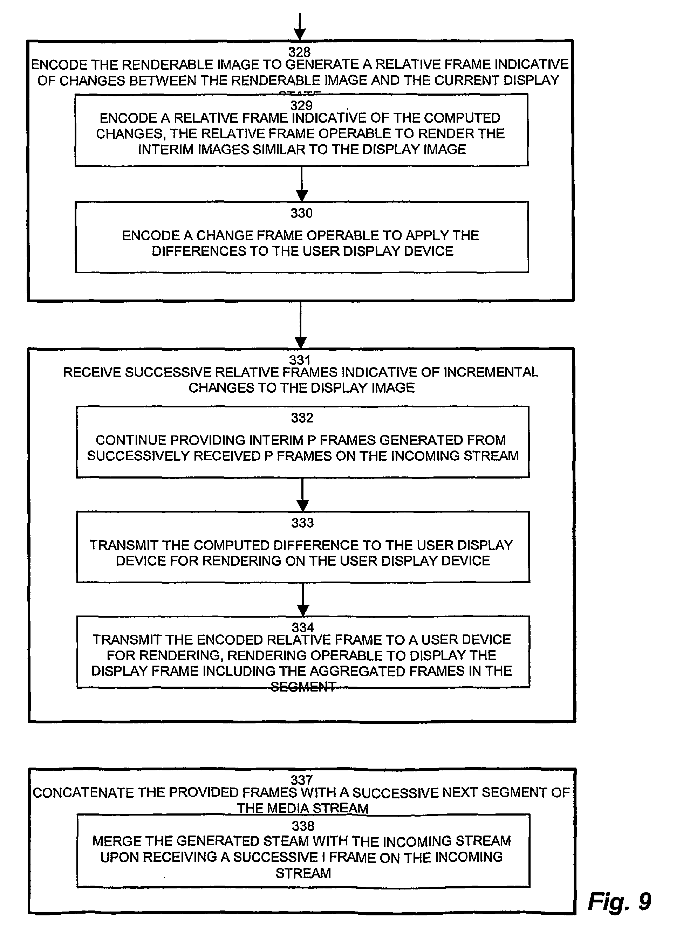

Figs. 5-9 are a flow chart of media streams 122-N from multiple sources 120-N as depicted in Figs. 2, 3 and 4. Referring to Figs. 2-9, at step 300, the application switcher 112 receives a plurality of media streams 122. The media streams are typically video streams, and emanate from a plurality of video service applications 120. The application switcher 112 identifies one or more media streams 124 having a plurality of segments, each of the segments defined by an ordered sequence of frames, as depicted at step 301. The selected streams 124 are those operable for fast (realtime, or near realtime) switchover with concatenation, as defined further below. Receiving the frames 150 further includes receiving complete frames (I-frames) and relative frames (P-frames), such that the relative frames are indicative of changes from a previous frame, in which a display image 118 includes a complete frame 150-0 and a sequence of at least zero relative frames 150-(1+N), as shown at step 302. The display image 118 (current image) is an aggregation of frames renderable on the user device 130 as a rendered image 134.

The compositor 114 maintains a current image 118-N of each of the plurality of media streams 124-N, such that maintaining including decoding a current frame 150 of each of the received media stream 124-N, as disclosed at step 303. The current frame is the most recently received relative or complete frame 150-0, 150-(2+N) in each media stream 124. Therefore, the compositor 114 aggregates received frames in the media stream to maintain the current frame as the current image 118, as shown at step 304. The compositor 114 accumulates successive relative frames 150 to maintain the current image (frame) 118 , as shown at step 305, and aggregates the received frames to maintain a display frame corresponding to a display image, as depicted at step 306. In other words, the current image 118 is operable to be immediately rendered on the user device 130.

Upon receiving each relative frame, the compositor 114 computes a current display frame based on the successive relative frames 150 applied to the current image 118, as depicted at step 307. Therefore, the compositor 114 computes a current frame indicative of each of the frames 150-N in the sequence, or media stream 124-N, received for the current segment 140, as shown at step 140. The compositor 114 applies the frames 150 by decoding the aggregated frames to generate a renderable frame as the current image 118, as disclosed at step 309. The current image 118 is therefore operable to be immediately re-encoded into an I-frame for display (rendering) on the user device 130.

At a particular point in the transmission of the media stream 124, a user elects to switch media streams, In other words, the user issues a command to direct the video portal 110 to present a media stream 124 from a different video service application (media source) 120 to the user feed 136. Typically, as indicated above, the compositor 114 is maintaining the current image 118 for several media streams 124-N, such as video mail, interactive games, movie trailers, stock tickers, or any suitable video source. Upon the user activating a button or icon, the video portal 110 receives a request 166 to redirect a particular media stream 124-2 to a user. A check is performed, as depicted at step 310, and if no request 166 has been received, control reverts to step 303 to maintain the current streams 124. Otherwise, the compositor 114 receives a video switch request 166 during a current segment 140 following a previous I frame 150-0 on the media stream 124-2 providing the requested content, as disclosed at step 311. Although possible, it is unlikely that the request coincides with a complete frame 150-0, therefore, at step 312, the compositor 114 receives a request to direct the identified media stream 124-2 to a requesting user, in which the request is received during a current segment 140 in the stream, rather than at the beginning (first, or I-frame). Accordingly, generating interim images (the remainder of the current segment 140) occurs upon receiving a request for delivery of the media stream 124-2, in which the request arrives in the middle of a segment 140, as depicted at step 313.

In response, at step 314, the video portal 110 immediately sends the already computed current frame 152-0 to the user in a seamless manner for rendering on the user display device 130, such that the seamless manner is operable to preserve synchronization of the display image with the computed current frame (image) 118. Therefore, switching involves switching a selected one of the plurality of media streams 124-N in response to the received request 166, in which switching is performed by first rendering the current frame 118 corresponding to the selected media stream 124-2, as shown at step 315. Switching the media stream 124-2 is performed in a manner that preserves synchronization between an existing rendered display image 134 at the user display device 130 and the redirected media stream 124-2, as depicted at step 316. The redirected media stream 124-2 arrives first as a complete I-frame 152-0 encoded by the encoder 164, in which the user display device 130 is operable to render a visual image from an encoded frame, and in which encoding incurs greater resources than decoding, as depicted at step 317. Therefore rendering includes computing a displayable image 134 from a complete frame 150-0 and at least zero relative frames 150-(1+N) of the media stream 124-2, as shown at step 318. Since encoding incurs additional resources, the compositor expects to commit encoding resources to the switchover only for the balance of the current frame, first with the interim I-frame 152-0 followed by the corresponding relative frames 152-(1+N), now discussed further below. In other words, the interim frame is an I frame inclusive of the I frame and all intervening P frames received on the switched media stream 124-1 up until the switchover point 170. The compositor 114 continues to receive successive relative (P-frames) from the media stream 124-2 of the corresponding video service application 122, as disclosed at step 319. Therefore, the compositor 114 provides an interim I-frame I-B0 corresponding to the previously generated I-frame I-AO and successive series of P frames P-A1, P-A2 received on the incoming stream 124-1, such that providing frames further comprising generating P-frames for the remainder of the current segment 140, as shown at step 320.
After generating an interim image from the display frame for rendering the initial complete frame, the compositor 114 continues redirecting the media stream to the user in a realtime manner by providing frames remaining in the current segment 140.
At step 321, the compositor generates relative frames P-B1, P-B2 corresponding to the switched media stream 124-2 for the remainder of the current segment 140, such that the generated relative frames 150-(2+N) complement the complete frame 118 in the current segment 140. For each frame 150-(2+N), the compositor 114 computes the difference between the relative frame and the renderable frame (I-frame) representing the current image 118, as depicted at step 322. Note that the differences accrue in the rendered image 134, such that each successive P-frame includes differences from the previous P-frame. Computing the difference further includes, at step 323, decoding the successive relative frame, and applying the decoded relative frame to the renderable image 134 indicative of a current display state 134-1 of the media stream 124-1, as shown at step 324. Thus, the relative frame displays a rendered image 134-2 similar to what the unswitched stream would have displayed at the same P-frame.

From the differences, the compositor generates interim frames indicative of the difference between the relative frame 150-(1+N) and the renderable frame 134-2, as depicted at step 325. The generated interim frame results from computing changes between the computed current display frame and the generated interim image, as shown at step 326, thus computing, for each received frame, changes contained therein, as depicted at step 327. Therefore, the interim P-frame includes the difference between the computed current frame 118 and the computed changes in the received P-frame on the application stream 124-1.

The compositor 114 invokes a decoder 162 for encoding the renderable image (current image) 118 to generate a relative frame indicative of changes between the renderable image and the current display state (the image on the user display 132), as shown at step 328. This includes, at step 329, encoding a relative frame (P-frame) indicative of the computed changes, such that the relative frame operable to render the interim images similar to the display image (the image displayed from the direct feed 124-1). The encoder 164 thus encodes a change frame operable to apply the differences to the user display device 132, as shown at step 330. These encoded frames P-B1, P-B2 differ from the P-frames on the media stream 124-1 emanating from the switched media source 122 because they are relative to the interim I-frame 134-2, rather than the unprocessed media source stream 124-1 I-frame depicted at frame 134-1.

The compositor 114 continues receiving successive relative frames indicative of incremental changes to the display image 134-1 (the media source P-frames), as depicted at step 331. For the duration of the current segment 140, the compositor receives successive relative frames from the media stream 124-1, and continues providing interim P frames generated from successively received P frames on the incoming stream 124-1, as disclosed at step 332. For each received P-frame, this involves transmitting the computed difference to the user display device 130 for rendering on the user display device 130, as shown at step 333. Therefore, the compositor transmits the encoded relative frame 152-(2+N) to the user device 130 for rendering, such that the rendering is operable to display the display frame 134-2 including the aggregated frames I-B0, P-B1, P-B2 in the segment 140, as depicted at step 334. The compositor 114 therefore computes the difference by decoding the received remaining frames, (i.e. each interim frame generated from the decoder switchover stream 124-2), applying the changes to the maintained current image 118, and reencoding a display frame as an interim P-frame 152-(1+N) containing the changes.

A check is performed at step 335, to determine if there are more frames in the current segment 140. If so, then control reverts to step 320 for each remaining relative frame. Otherwise, the end of the current segment 140-1 has been reached and the media switcher 116 concatenates the switched media stream 124-2 to an existing user media stream 124-1 without loss of synchronization on the user display device 130, as shown at step 336. Therefore, the media switcher 116 concatenates the provided frames from the interim stream 126-2 with a successive next segment 140-2 of the media stream 126-1 as depicted at step 337. Upon the receipt of the I-frame of the next segment 140, the interim stream 126-2 may be replaced with the application media stream 126-1 since successive frames may be sent directly through to the user from the application, without reencoding to provide interim relative frames as above. Accordingly, the compositor 114 merges the generated stream 126-2 with the incoming stream 126-1 upon receiving a successive I frame on the incoming stream 126-1, thus marking the beginning of the next segment 140, as shown at step 338.

Those skilled in the art should readily appreciate that the programs and methods for delivering media services as defined herein are deliverable to a user processing and rendering device in many forms, including but not limited to a) information permanently stored on non-writeable storage media such as ROM devices, b) information alterably stored on writeable storage media such as floppy disks, magnetic tapes, CDs, RAM devices, and other magnetic and optical media, or c) information conveyed to a computer through communication media, for example using baseband signaling or broadband signaling techniques, as in an electronic network such as the Internet or telephone modem lines. The operations and methods may be implemented in a software executable object or as a set of instructions embedded in a carrier wave. Alternatively, the operations and methods disclosed herein may be embodied in whole or in part using hardware components, such as Application Specific Integrated Circuits (ASICs), Field Programmable Gate Arrays (FPGAs), state machines, controllers or other hardware components or devices, or a combination of hardware, software, and firmware components.

While the system and method for delivering media services has been particularly shown and described with references to embodiments thereof, it will be understood by those skilled in the art that various changes in form and details may be made therein without departing from the scope of the invention encompassed by the appended claims.

## Claims

1. A method of delivering video services comprising:
identifying a media stream having a plurality of segments, the plurality of segments including a current segment and a successive next segment, each of the segments being defined by an ordered sequence of frames including an I-frame followed by a plurality of P-frames;
decoding the I-frame and at least one of the plurality of P-frames in the current segment to obtain a plurality of decoded frames, at least one undecoded P-frame remaining in the current segment;
maintaining the plurality of decoded frames as a current image;
receiving a request to direct the media stream to a requesting user, the request being received during the current segment in the media stream;
encoding the current image to obtain a renderable frame;
directing the renderable frame to the requesting user;
redirecting the media stream to the requesting user in a real-time manner, the redirecting of the media stream including :
aggregating the I-frame and the at least one of the plurality of P-frames in the media stream to maintain the current image;
decoding the aggregated frames to generate the renderable frame;
receiving the at least one undecoded P-frame remaining in the current segment from the media stream;
decoding the at least one undecoded P-frame remaining in the current segment to obtain at least one decoded P-frame;
computing at least one difference between the at least one decoded P-frame and the renderable frame; and
generating interim frames indicative of the at least one difference between the at least one decoded P-frame and the renderable frame; and
concatenating the interim frames with the successive next segment of the media stream.

2. The method of claim 1 wherein the redirecting of the media stream includes switching the media stream in a manner that preserves synchronization between an existing display image at a user display device and the redirected media stream.

3. The method of claim 2 further including rendering a visual image from an encoded frame by the user display device.

4. The method of claim 3 wherein the rendering of the visual image comprises computing a displayable image from the I-frame and the at least one of the plurality of P-frames in the current segment of the media stream.

5. The method of claim 1 wherein the computing of the at least one difference between the at least one decoded P-frame and the renderable frame comprises:
applying, after the decoding, the at least one decoded P-frame to a renderable image indicative of a current display state of the media stream; and
encoding the renderable image to generate at least one P-frame indicative of changes between the renderable image and the current display state.

6. The method of claim 5 further comprising accumulating successive P-frames to maintain the current image, wherein the generating of the interim frames occurs upon receiving the request for delivery of the media stream, the request arriving in the middle of the current segment.

7. The method of claim 1 further comprising
receiving a plurality of media streams;
maintaining a current image of each of the plurality of media streams, the maintaining of the current image of each of the plurality of media streams including decoding a current frame of each of the received media streams;
switching a selected one of the plurality of media streams in response to the received request, the switching of the selected one of the plurality of media streams being performed by rendering the current frame corresponding to the selected media stream; and
concatenating the switched media stream to an existing user media stream without loss of synchronization on the user display device.

8. The method of claim 2 wherein the redirecting of the media stream further comprises:
receiving the I-frame and the at least one of the plurality of P-frames in the current segment;
aggregating the I-frame and the at least one of the plurality of P-frames received from the current segment to maintain the current image corresponding to a current frame;
generating an interim image from the current image; and
receiving the at least one decoded P-frame indicative of incremental changes to the current frame.

9. The method of claim 8 wherein the switching of the media stream further comprises:
computing a current display frame based on the at least one decoded P-frame;
computing changes between the computed current display frame and the generated interim image;
encoding the at least one decoded P-frame, the at least one decoded P-frame being operable to render the interim images similar to the current frame; and
transmitting, after the encoding, the at least one decoded P-frame to a user device for rendering, the rendering being operable to display the current image including the aggregated frames in the current segment.

10. The method of claim 2 wherein the redirecting of the media stream further comprises:
receiving the request to redirect the media stream to a user;
computing a current frame indicative of the I-frame and the at least one of the plurality of P-frames in the current segment;
immediately sending the computed current frame to the user in a seamless manner for rendering on a user display device, the seamless manner being operable to preserve synchronization of the display image with the computed current frame;
receiving the at least one decoded P-frame;
computing, for each of the at least one decoded P-frame, changes contained therein;
computing at least one difference between the computed current frame and the computed changes; and
transmitting the at least one difference to the user display device for rendering on the user display device.

11. A method of switching a media stream to a requesting user in response to a request comprising the steps of:
receiving a video switch request during a current segment following a previous I-frame on the media stream providing requested content;
providing an interim I-frame corresponding to the previous I-frame and a successive series of P-frames received on an incoming stream, the providing of the interim I-frame comprising generating P-frames for a remainder of the current segment;
providing interim P-frames generated from the successive series of P-frames on the incoming stream;
decoding the interim I-frame and the interim P-frames to obtain a plurality of decoded frames;
maintaining the plurality of decoded frames as a current image;
in response to the request, encoding the current image to obtain a renderable frame;
directing the renderable frame to the requesting user;
redirecting the media stream to the requesting user in a real-time manner, the redirecting of the media stream including:
aggregating the interim I-frame and the interim P-frames to maintain the current image;
decoding the aggregated frames to generate the renderable frame;
receiving the P-frames for the remainder of the current segment;
decoding the P-frames for the remainder of the current segment to obtain at least one decoded P-frame;
computing at least one difference between the at least one decided P-frame and the renderable frame; and
generating interim frames indicative of the at least one difference between the at least one decoded P-frame and the renderable frame; and
merging the interim frames with the incoming stream upon receiving a successive I-frame on the incoming stream.

12. A video portal comprising:
an application switcher operable to identify a media stream having a plurality of segments, the plurality of segments including a current segment and a successive next segment, each of the segments being defined by an ordered sequence of frames including an I-frame followed by a plurality of P-frames;
an interface to a user device operable to receive a request to direct the identified media stream to a requesting user, the request received during the current segment in the media stream;
a compositor responsive to the interface and operable:
to decode the I-frame and at least one of the plurality of P-frames in the current segment to obtain a plurality of decoded frames, at least one undecoded P-frame remaining in the current segment;
to maintain the plurality of decoded frames as a current image;
to encode the current image to obtain a renderable frame;
to direct the renderable frame to the user device;
to redirect the media stream to the user device in a real-time manner ;
to aggregate the I-frame and the at least one of the plurality of P-frames in the media stream to maintain the current image;
to decode the aggregated frames to generate the renderable frame;
to receive the at least one undecoded P-frame remaining in the current segment from the media stream;
to decode the at least one undecoded P-frame remaining in the current segment to obtain at least one decoded P-frame;
to compute at least one difference between the at least one decoded P-frame and the renderable frame;
to generate interim frames indicative of the at least one difference between the at least one decoded P-frame and the renderable frame; and
a media switcher operable to concatenate the interim frames with the successive next segment of the media stream.

13. The video portal of claim 12 wherein the compositor is further operable:
to switch the media stream in a manner that preserves synchronization between an existing display image at a user display device and the redirected media stream.

14. The video portal of claim 13 wherein the interface is coupled to a user display device operable to render a visual image from an encoded frame.

15. The video portal of claim 12 wherein the compositor further comprises:
the current image adapted to apply, after decoding, the at least one decoded P-frame remaining in the current segment to a renderable image indicative of a current display state of the media stream; and
an encoder operable to encode the renderable image to generate at least one P-frame indicative of changes between the renderable image and the current display state.

16. The video portal of claim 12 wherein the application switcher is operable to receive a plurality of media streams from media service applications, wherein the compositor is further operable:
to maintain a current image of each of the plurality of media streams, the maintaining of the current image of each of the plurality of media streams including decoding a current frame of each of the received media streams;
to switch a selected one of the plurality of media streams in response to the received request, the switching of the selected one of the plurality of media streams being performed by rendering the current frame corresponding to the selected media stream; and
to invoke the media switcher to concatenate the switched media stream to an existing user media stream without loss of synchronization on the user display device.

17. The video portal of claim 16 wherein the compositor is further operable, for each of the media frames:
to receive the I-frame and the at least one of the plurality of P-frames in the current segment;
to aggregate the I-frame and the at least one of the plurality of P-frames received from the current segment to maintain the current image corresponding to a current frame;
to generate an interim image from the current image; and
to receive the at least one decoded P-frame indicative of incremental changes to the current frame.

18. A computer program product having a computer readable medium operable to store computer program logic embodied in computer program code encoded thereon for delivering video services comprising:
computer program code for receiving a video switch request during a current segment following a previous I-frame on the stream providing requested content;
computer program code for switching the media stream in a manner that preserves synchronization between an existing display image at a user display device and the redirected media stream;
computer program code for immediately sending the computed current frame to a requesting user in a seamless manner for rendering on a user display device;
computer program code for generating interim I-frames corresponding to the switched media stream for a remainder of the current segment, and interim P-frames complementing the interim I-frames in the current segment;
computer program code for transmitting each of the interim I-frames corresponding to a previous I-frame and a successive series of P-frames received on an incoming stream, and for generating P-frames for the remainder of the current segment;
computer program code for providing the interim P-frames generated from the successive series of P-frames on the incoming stream;
computer program code for decoding the interim I-frame and the interim P-frames to obtain a plurality of decoded frames;
computer program code for maintaining the plurality of decoded frames as a current image;
computer program code for encoding, in response to the video switch request, the current image to obtain a renderable frame;
computer program code for directing the renderable frame to the requesting user;
computer program code for redirecting the media stream to the requesting user in a real-time manner, the computer program code for redirecting the media stream including:
computer program code for aggregating the interim I-frame and the interim P-frames to maintain the current image;
computer program code for decoding the aggregated frames to generate the renderable frame;
computer program code for receiving the P-frames for the remainder of the current segment;
computer program code for decoding the P-frames for the remainder of the current segment to obtain at least one decoded P-frame;
computer program code for computing at least one difference between the at least one decoded P-frame and the renderable frame;
computer program code for generating interim frames indicative of the at least one difference between the at least one decoded P-frame and the renderable frame; and
computer program code for merging the interim frames with the incoming stream upon receiving a successive I-frame on the incoming stream.

19. A video enabled personal communications device responsive to a user request for switching a media stream comprising:
means for identifying a media stream having a plurality of segments, the plurality of segments including a current segment and a successive next segment, each of the segments being defined by an ordered sequence of frames including an I-frame followed by a plurality of P-frames;
means for receiving a request to direct the identified media stream from a content processor to a requesting user, the request being received during the current segment;
means for decoding the I-frame and at least one of the plurality of P-frames in the current segment to obtain a plurality of decoded frames, at least one undecoded P-frame remaining in the current segment;
means for maintaining the plurality of decoded frames as a current image;
means for encoding the current image to obtain a renderable frame;
means for directing the renderable frame to the requesting user;
means for redirecting the media stream to the requesting user in a real-time manner, the means for redirecting the media stream including:
means for aggregating the interim I-frame and the interim P-frames to maintain the current image;
means for decoding the aggregated frames to generate the renderable frame;
means for receiving the P-frames for the remainder of the current segment;
means for decoding the P-frames for the remainder of the current segment to obtain at least one decoded P-frame;
means for computing at least one difference between the at least one decoded P-frame and the renderable frame; and
means for generating interim frames indicative of the at least one difference between the at least one decoded P-frame and the renderable frame; and
means for concatenating the interim frames with the next segment of the media stream.

## Patentansprüche

1. Verfahren zur Bereitstellung von Videodiensten, umfassend:
Identifizieren eines Medienstroms, welcher eine Mehrzahl von Segmenten aufweist, wobei die Mehrzahl von Segmenten ein aktuelles Segment und ein folgendes nächstes Segment umfasst, wobei jedes von den Segmenten durch eine geordnete Sequenz von Frames definiert ist, welche einen I-Frame gefolgt von einer Mehrzahl von P-Frames umfasst;
Decodieren des I-Frames und wenigstens eines aus der Mehrzahl von P-Frames in dem aktuellen Segment, um eine Mehrzahl von decodierten Frames zu erhalten, wobei wenigstens ein undecodierter P-Frame in dem aktuellen Segment übrig bleibt;
Beibehalten der Mehrzahl von decodierten Frames als ein aktuelles Bild;
Empfangen einer Anforderung, den Medienstrom an einen anfordernden Benutzer zu leiten, wobei die Anforderung während des aktuellen Segments in dem Medienstrom empfangen wird;
Codieren des aktuellen Bildes, um einen wiedergebbaren Frame zu erhalten;
Leiten des wiedergebbaren Frames an den anfordernden Benutzer;
Umleiten des Medienstroms an den anfordernden Benutzer in Echtzeit,
wobei das Umleiten des Medienstroms umfasst:
Verbinden des I-Frames und des wenigstens einen von der Mehrzahl von P-Frames in dem Medienstrom, um das aktuelle Bild beizubehalten;
Decodieren der verbundenen Frames, um den wiedergebbaren Frame zu erzeugen;
Empfangen des wenigstens einen undecodierten P-Frames, welcher in dem aktuellen Segment übrig geblieben ist, von dem Medienstrom;
Decodieren des wenigstens einen undecodierten P-Frames, der in dem aktuellen Segment übrig geblieben ist, um wenigstens einen decodierten P-Frame zu erhalten;
Berechnen von wenigstens einer Differenzen zwischen dem wenigstens einen decodierten P-Frame und dem wiedergebbaren Frame; und
Erzeugen von Zwischenframes, die die wenigstens eine Differenz zwischen dem wenigstens einen decodierten P-Frame und dem wiedergebbaren Frame anzeigen; und
Konkatenieren der Zwischenframes mit dem folgenden nächsten Segment des Medienstroms.

2. Verfahren nach Anspruch 1,
wobei das Umleiten des Medienstroms ein Umschalten des Medienstroms umfasst, derart dass, eine Synchronisation zwischen einem existierenden Anzeigebild an einer Benutzeranzeigevorrichtung und dem umgeleiteten Medienstrom erhalten wird.

3. Verfahren nach Anspruch 2,
ferner umfassend ein Wiedergeben eines visuellen Bildes aus einem codierten Frame durch die Benutzeranzeigevorrichtung.

4. Verfahren nach Anspruch 3,
wobei das Wiedergeben des visuellen Bildes ein Berechnen eines anzeigbaren Bildes aus dem I-Fame und dem wenigstens einen von der Mehrzahl von P-Frames in dem aktuellen Segment des Medienstroms umfasst.

5. Verfahren nach Anspruch 1,
wobei das Berechnen von der wenigstens einen Differenz zwischen dem wenigstens einen decodierten P-Frame und dem wiedergebbaren Frame umfasst:
Anwenden nach dem Decodieren des wenigstens einen decodierten P-Frames auf ein wiedergebbares Bild, welches einen aktuellen Anzeigezustand des Medienstroms angezeigt; und
Codieren des wiedergebbaren Bildes, um wenigstens einen P-Frame zu erzeugen, welcher Änderungen zwischen dem wiedergebbaren Bild und dem aktuellen Anzeigezustand anzeigt.

6. Verfahren nach Anspruch 5,
ferner umfassend ein Akkumulieren von aufeinanderfolgenden P-Frames, um das aktuelle Bild beizubehalten, wobei das Erzeugen von Zwischenframes auf das Empfangen der Anforderung zum Liefern des Medienstroms hin auftritt, wobei die Anforderung in der Mitte des aktuellen Segments ankommt.

7. Verfahren nach Anspruch 1, ferner umfassend:
Empfangen einer Mehrzahl von Medienströmen;
Beibehalten eines aktuellen Bildes von jedem von der Mehrzahl von Medienströmen, wobei das Beibehalten des aktuellen Bildes von jedem von der Mehrzahl von Medienströmen ein Decodieren eines aktuellen Frames von jedem von den empfangenen Medienströmen umfasst;
Umschalten eines ausgewählten einen aus der Mehrzahl von Medienströmen als Antwort auf die empfangene Anforderung, wobei das Umschalten des ausgewählten einen aus der Mehrzahl von Medienströmen durchgeführt wird, indem der aktuelle Frame entsprechend dem ausgewählten Medienstrom wiedergegeben wird; und
Konkatenieren des umgeschalteten Medienstroms mit einem existierenden Benutzermedienstrom ohne dass eine Synchronisation an der Benutzeranzeigevorrichtung verloren geht.

8. Verfahren nach Anspruch 2, wobei das Umleiten des Medienstroms ferner umfasst:
Empfangen des I-Frames und des wenigstens einen aus der Mehrzahl von P-Frames in dem aktuellen Segment;
Verbinden des I-Frames und des wenigstens einen aus der Mehrzahl von P-Frames, welcher von dem aktuellen Segment erhalten wird, um das aktuelle Bild, das einem aktuellen Frame entspricht, beizubehalten;
Erzeugen eines Zwischenbildes aus dem aktuellen Bild; und
Empfangen des wenigstens einen decodierten P-Frames, welcher inkrementelle Änderungen des aktuellen Frames anzeigt.

9. Verfahren nach Anspruch 8, wobei das Umschalten des Medienstroms ferner umfasst:
Berechnen eines aktuellen Anzeigeframes, auf Grundlage des wenigstens einen decodierten P-Frames;
Berechnen von Änderungen zwischen dem berechneten aktuellen Anzeigeframe und dem erzeugten Zwischenbild;
Codieren des wenigstens einen decodierten P-Frames, wobei der wenigstens eine decodierte P-Frame betriebsfähig ist, um die Zwischenbilder, die dem aktuellen Frame ähnlich sind, wiederzugeben; und
Übertragen nach dem Codieren des wenigstens einen decodierten P-Frames an eine Benutzervorrichtung zur Wiedergabe, wobei die Wiedergabe betriebsfähig ist, um das aktuelle Bild, welches die verbundenen Frames enthält, in dem aktuellen Segment anzuzeigen.

10. Verfahren nach Anspruch 2, wobei das Umleiten des Medienstroms ferner umfasst:
Empfangen der Anforderung, den Medienstrom an einen Benutzer umzuleiten;
Berechnen eines aktuellen Frames, welcher den I-Frame und den wenigstens einen von der Mehrzahl von P-Frames in dem aktuellen Segment anzeigt;
sofortiges Senden des berechneten aktuellen Frames an den Benutzer auf nahtlose Weise, zur Wiedergabe auf einer Benutzeranzeigevorrichtung, wobei die nahtlose Weise derart wirkt, dass eine Synchronisation des angezeigten Bildes mit dem berechneten aktuellen Frame erhalten wird;
Empfangen des wenigstens einen decodierten P-Frames;
Berechnen für jeden von dem wenigstens einen decodierten P-Frame von darin enthaltenen Änderungen;
Berechnen von wenigstens einer Differenz zwischen dem berechneten aktuellen Frame und den berechneten Änderungen; und
Übertragen der wenigstens einen Differenz an die Benutzeranzeigevorrichtung zur Wiedergabe auf der Benutzeranzeigevorrichtung.

11. Verfahren zum Umschalten eines Medienstroms an einen anfordernden Benutzer als Antwort auf eine Anforderung, umfassende die Schritte:
Empfangen einer Videoumschaltanforderung während eines aktuellen Segments nach einem vorherigen I-Frame auf dem Medienstrom, welcher einen angeforderten Inhalt enthält;
Bereitstellen eines Zwischen-I-Frames, welcher dem vorherigen I-Frame und einer folgenden Serie von P-Frames entspricht, die auf einem Eingangsstrom empfangen werden, wobei das Bereitstellen des Zwischen-I-Frames ein Erzeugen von P-Frames für einen Rest des aktuellen Segments umfasst;
Bereitstellen von Zwischen-P-Frames, die aus den folgenden Serien von P-Frames auf dem Eingangsstrom erzeugt werden;
Decodieren des Zwischen-I-Frames und der Zwischen-P-Frames, um eine Mehrzahl von decodierten Frames zu erhalten;
Beibehalten der Mehrzahl von decodierten Frames als ein aktuelles Bild;
Codieren des aktuellen Bildes als Antwort auf die Anforderung, um einen wiedergebbaren Frame zu erhalten;
Leiten des wiedergebbaren Frames an den anfordernden Benutzer;
Umleiten des Medienstroms an den anfordernden Benutzer in Echtzeit,
wobei das Umleiten des Medienstroms umfasst:
Verbinden des Zwischen-I-Frames und der Zwischen-P-Frames, um das aktuelle Bild beizubehalten;
Decodieren der verbundenen Frames, um den wiedergebbaren Frame zu erzeugen;
Empfangen der P-Frames für den Rest des aktuellen Segments;
Decodieren der P-Frames für den Rest des aktuellen Segments, um wenigstens einen decodierten P-Frame zu erhalten;
Berechnen von wenigstens einer Differenz zwischen dem wenigstens einen decodierten P-Frame und dem wiedergebbaren Frame; und
Erzeugen von Zwischenframes, die die wenigstens eine Differenz zwischen dem wenigstens einen decodierten P-Frame und dem wiedergebbaren Frame anzeigen; und
Zusammenführen der Zwischenframes mit dem Eingangsstrom auf Erhalten eines folgenden I-Frames auf dem Eingangsstrom hin.

12. Videoportal, umfassend:
einen Anwendungsumschalter, welcher betriebsfähig ist, um einen Medienstrom, welcher eine Mehrzahl von Segmenten aufweist, zu identifizieren, wobei die Mehrzahl von Segmenten ein aktuelles Segment und
ein folgendes nächstes Segment umfasst, wobei jedes von den Segmenten durch eine geordnete Sequenz von Frames definiert ist, welche einen I-Frame gefolgt von einer Mehrzahl von P-Frames umfasst;
eine Schnittstelle mit einer Benutzervorrichtung, die betriebsfähig ist, um eine Anforderung zu empfangen, um den identifizierten Medienstrom an einen anfordernden Benutzer zu leiten, wobei die Anforderung während des aktuellen Segments in dem Medienstrom empfangen wird;
eine Zusammenstellungseinrichtung, die an der Schnittstelle ansprechbar ist und betriebsfähig ist, um:
den I-Frame und wenigstens einen von der Mehrzahl von P-Frames in dem aktuellen Segment zu decodieren, um eine Mehrzahl von decodierten Frames zu erhalten, wobei wenigstens ein undecodierter P-Frame in dem aktuellen Segment übrig bleibt;
die Mehrzahl von decodierten Frames als ein aktuelles Bild beizubehalten;
das aktuelle Bild zu codieren, um einen wiedergebbaren Frame zu erhalten;
den wiedergebbaren Frame an die Benutzervorrichtung zu leiten;
den Medienstrom an die Benutzervorrichtung in Echtzeit umzuleiten;
den I-Frame und den wenigstens einen von der Mehrzahl von P-Frames in dem Medienstrom zu verbinden, um das aktuelle Bild beizubehalten;
die verbundenen Frames zu decodieren, um den wiedergebbaren Frame zu erzeugen;
den wenigstens einen undecodierten P-Frame, welcher in dem aktuellen Segment übrig bleibt, von dem Medienstrom zu empfangen;
den wenigstens einen undecodierten P-Frame, der in dem aktuellen Segment übrig bleibt, zu decodieren, um wenigstens einen decodierten P-Frame zu erhalten;
wenigstens eine Differenz zwischen dem wenigstens einen decodierten P-Frame und dem wiedergebbaren Frame zu berechnen;
Zwischenframes zu erzeugen, die wenigstens eine Differenz zwischen dem wenigstens einen decodierten P-Frame und dem wiedergebbaren Frame anzeigen; und
einen Medienumschalter, welcher betriebsfähig ist, um die Zwischenframes mit dem nachfolgenden nächsten Segment des Medienstroms zu konkatenieren.

13. Videoportal nach Anspruch 12,
wobei die Zusammenstellungseinrichtung ferner betriebsfähig ist, um den Medienstrom auf eine Weise umzuschalten, die eine Synchronisation zwischen einem existierenden Anzeigebild auf einer Benutzeranzeigevorrichtung und dem umgeleiteten Medienstrom erhält.

14. Videoportal nach Anspruch 13,
wobei die Schnittstelle mit einer Benutzeranzeigevorrichtung gekoppelt ist, die betriebsfähig ist, um ein visuelles Bild aus einem codierten Frame wiederzugeben.

15. Videoportal nach Anspruch 12, wobei die Zusammenstellungseinrichtung ferner umfasst:
das aktuelle Bild, welches dazu angepasst ist, um nach dem Decodieren, den wenigstens einen decodierten P-Frame, der in dem aktuellen Segment übrig geblieben ist, auf ein wiedergebbares Bild anzuwenden, welches einen aktuellen Anzeigezustand des Medienstroms angezeigt; und
einen Codierer, welcher betriebsfähig ist, um das wiedergebbare Bild zu codieren, um wenigstens einen P-Frame zu erzeugen, der Änderungen zwischen dem wiedergebbaren Bild und dem aktuellen Anzeigezustand anzeigt.

16. Videoportal nach Anspruch 12,
wobei der Anwendungsumschalter betriebsfähig ist, um eine Mehrzahl von Medienströmen von Mediendienstanwendungen zu empfangen, wobei die Zusammenstellungseinrichtung ferner betriebsfähig ist, um:
ein aktuelles Bild von jedem von der Mehrzahl von Medienströmen beizubehalten, wobei das Beibehalten des aktuellen Bildes von jedem von der Mehrzahl von Medienströmen ein Decodieren eines aktuellen Frames von jedem von den empfangenen Medienströmen umfasst;
einen ausgewählten einen aus der Mehrzahl von Medienströmen umzuschalten, als Antwort auf die empfangene Anforderung, wobei das Umschalten des ausgewählten einen von der Mehrzahl von Medienströmen durch Wiedergabe des aktuellen Frames entsprechend dem ausgewählten Medienstrom durchgeführt wird; und
den Medienumschalter aufzurufen, um den umgeschalteten Medienstrom mit einem existierenden Benutzermedienstrom zu konkatenieren, ohne eine Synchronisation an der Benutzeranzeigevorrichtung zu verlieren.

17. Videoportal nach Anspruch 16,
wobei die Zusammenstellungseinrichtung ferner betriebsfähig ist, um für jeden von den Medienframes:
den 1-Frame und den wenigstens einen von der Mehrzahl von P-Frames in dem aktuellen Segment zu empfangen;
den I-Frame und den wenigstens einen von der Mehrzahl von P-Frames, welche von dem aktuellen Segment empfangen werden, zu verbinden, um das aktuelle Bild, welches einem aktuellen Frame entspricht, beizubehalten;
aus dem aktuellen Bild ein Zwischenbild zu erzeugen; und
den wenigstens einen decodierten P-Frame zu empfangen, welcher inkrementelle Änderungen an dem aktuellen Frames anzeigt.

18. Computerprogrammerzeugnis, welches ein Computer-lesbares Medium aufweist, welches betriebsfähig ist, um in einem darauf codierten Computerprogrammcode eingebettete Computerprogrammlogik zu speichern, um Videodienste bereitzustellen, umfassend:
einen Computerprogrammcode zum Empfangen einer Videoumschaltanforderung während eines aktuellen Segments nach einem vorherigen 1-Frame auf dem Strom, welcher einen angeforderten Inhalt bereitstellt;
einen Computerprogrammcode zum Umschalten des Medienstroms auf eine Weise, die eine Synchronisation zwischen einem existierenden Anzeigebild an einer Benutzeranzeigevorrichtung und dem umgeleiteten Medienstrom erhält;
einen Computerprogrammcode zum sofortigen Senden des berechneten aktuellen Frames an einen anfordernden Benutzer auf nahtlose Weise, zur Wiedergabe auf einer Benutzeranzeigevorrichtung;
einen Computerprogrammcode zum Erzeugen von Zwischen-I-Frames, die dem umgeschalteten Medienstrom entsprechen, für einen Rest des aktuellen Segments und von Zwischen-P-Frames, die in dem aktuellen Segment die Zwischen-I-Frames komplementieren;
einen Computerprogrammcode zum Übertragen von jedem der Zwischen-i-Frames, die einem vorherigen I-Frame entsprechen, und von folgenden Serien von P-Frames, die auf einem Eingangsstrom empfangen werden, und zum Erzeugen von P-Frames für den Rest des aktuellen Segments;
einen Computerprogrammcode zum Bereitstellen der Zwischen-P-Frames, die aus den folgenden Serien von P-Frames auf dem Eingangsstrom erzeugt werden;
einen Computerprogrammcode zum Decodieren des Zwischen-I-Frames und der Zwischen-P-Frames, um eine Mehrzahl von decodierten Frames zu erhalten;
einen Computerprogrammcode zum Beibehalten der Mehrzahl von decodierten Frames als ein aktuelles Bild;
einen Computerprogrammcode zum Codieren des aktuellen Bildes als Antwort auf die Videoumschaltanforderung, um einen wiedergebbaren Frame zu erhalten;
einen Computerprogrammcode zum Leiten des wiedergebbaren Frames an den anfordernden Benutzer;
einen Computerprogrammcode zum Umleiten des Medienstroms an den anfordernden Benutzer in Echtzeit, wobei der Computerprogrammcode zum Umleiten des Medienstroms umfasst:
einen Computerprogrammcode zum Verbinden des Zwischen-I-Frames und der Zwischen-P-Frames, um das aktuelle Bild beizubehalten;
einen Computerprogrammcode zum Decodieren der verbundenen Frames, um den wiedergebbaren Frame zu erzeugen;
einen Computerprogrammcode zum Empfangen der P-Frames für den Rest des aktuellen Segments;
einen Computerprogrammcode zum Decodieren der P-Frames für den Rest des aktuellen Segments, um wenigstens einen decodierten P-Frame zu erhalten;
einen Computerprogrammcode zum Berechnen von wenigstens einer Differenz zwischen dem wenigstens einen decodierten P-Frame und dem wiedergebbaren Frame;
einen Computerprogrammcode zum Erzeugen von Zwischenframes, die wenigstens die eine Differenz zwischen dem wenigstens einen decodierten P-Frame und dem wiedergebbaren Frame anzeigen; und
einen Computerprogrammcode zum Zusammenführen der Zwischenframes mit dem Eingangsstrom nachdem ein nachfolgender 1-Frame auf dem Eingangsstrom empfangen wird.

19. Videofähige persönliche Kommunikationsvorrichtung, die durch eine Benutzeranforderung ansprechbar ist, zum Umschalten eines Medienstroms, umfassend:
Mittel zum Identifizieren eines Medienstroms, welcher eine Mehrzahl von Segmenten aufweist, wobei die Mehrzahl von Segmenten ein aktuelles Segment und ein folgendes nächstes Segment umfasst, wobei jedes von den Segmenten durch eine geordnete Sequenz von Frames definiert ist, die einen I-Frame gefolgt von einer Mehrzahl von P-Frames umfasst;
Mittel zum Empfangen einer Anforderung, den identifizierten Medienstrom von einem Inhaltsprozessor an einen anfordernden Benutzer zu leiten, wobei die Anforderung während des aktuellen Segments empfangen wird;
Mittel zum Decodieren des I-Frames und des wenigstens einen von der Mehrzahl von P-Frames in dem aktuellen Segment, um eine Mehrzahl von decodierten Frames zu erhalten, wobei wenigstens ein undecodierter P-Frame in dem aktuellen Segment übrig bleibt;
Mittel zum Beibehalten der Mehrzahl von decodierten Frames als ein aktuelles Bild;
Mittel zum Codieren des aktuellen Bildes, um einen wiedergebbaren Frame zu erhalten;
Mittel zum Leiten des wiedergebbaren Frames an den anfordernden Benutzer;
Mittel zum Umleiten des Medienstroms an den anfordernden Benutzer in Echtzeit, wobei die Mittel zum Umleiten des Medienstroms umfassen:
Mittel zum Verbinden des Zwischen-I-Frames und der Zwischen-P-Frames, um das aktuelle Bild beizubehalten;
Mittel zum Decodieren der verbundenen Frames, um den wiedergebbaren Frame zu erzeugen;
Mittel zum Empfangen der P-Frames für den Rest des aktuellen Segments;
Mittel zum Decodieren der P-Frames für den Rest des aktuellen Segments, um wenigstens einen decodierten P-Frame zu erhalten;
Mittel zum Berechnen von wenigstens einer Differenz zwischen dem wenigstens einen decodierten P-Frame und dem wiedergebbaren Frame; und
Mittel zum Erzeugen von Zwischenframes, die wenigstens die eine Differenz zwischen dem wenigstens einen decodierten P-Frame und dem wiedergebbaren Frame anzeigen; und
Mittel zum Konkatenieren der Zwischenframes mit dem nächsten Segment des Medienstroms.

## Revendications

1. Procédé de fourniture de services vidéo comprenant:
l'identification d'une transmission multimédia ayant une pluralité de segments, la pluralité de segments comprenant un segment actuel et un segment suivant successif, chacun des segments étant défini par une séquence ordonnée de trames comprenant une trame I suivie par une pluralité de trames P;
le décodage de la trame I et au moins l'une de la pluralité de trames P dans le segment actuel pour obtenir une pluralité de trames décodées, au moins une trame P non décodée restant dans le segment actuel;
le maintien de la pluralité de trames décodées comme étant une image actuelle;
la réception d'une demande pour orienter la transmission multimédia vers un utilisateur demandeur, la demande étant reçue pendant le segment actuel dans la transmission multimédia;
le codage de l'image actuelle pour obtenir une trame restituable;
l'orientation de la trame restituable vers l'utilisateur demandeur;
la réorientation de la transmission multimédia vers l'utilisateur demandeur d'une manière en temps réel, la réorientation de la transmission multimédia comprenant:
l'agrégation de la trame I et l'au moins une de la pluralité de trames P dans la transmission multimédia pour maintenir l'image actuelle;
le décodage des trames agrégées pour générer la trame restituable;
la réception de l'au moins une trame P non décodée restant dans le segment actuel de la transmission multimédia;
le décodage de l'au moins une trame P non décodée restant dans le segment actuel pour obtenir au moins une trame P décodée;
le calcul d'au moins une différence entre l'au moins une trame P décodée et la trame restituable; et
la génération de trames intermédiaires indicatrices de l'au moins une différence entre l'au moins une trame P décodée et la trame restituable; et
la concaténation des trames intermédiaires avec le segment suivant successif de la transmission multimédia.

2. Procédé de la revendication 1 dans lequel la réorientation de la transmission multimédia comprend la commutation de la transmission multimédia de manière à conserver la synchronisation entre une image d'affichage existante sur un dispositif d'affichage d'utilisateur et la transmission multimédia réorientée.

3. Procédé de la revendication 2 comprenant en outre la restitution d'une image visuelle à partir d'une trame codée par le dispositif d'affichage d'utilisateur.

4. Procédé de la revendication 3 dans lequel la restitution de l'image visuelle comprend le calcul d'une image affichable à partir de la trame I et l'au moins une de la pluralité de trames P dans le segment actuel de la transmission multimédia.

5. Procédé de la revendication 1 dans lequel le calcul de l'au moins une différence entre l'au moins une trame P décodée et la trame restituable comprend:
l'application, après le décodage, de l'au moins une trame P décodée en image restituable indicatrice d'un état d'affichage actuel de la transmission multimédia; et
le codage de l'image restituable pour générer au moins une trame P indicatrice de changements entre l'image restituable et l'état d'affichage actuel.

6. Procédé de la revendication 5 comprenant en outre l'accumulation de trames P successives pour maintenir l'image actuelle, la génération des trames intermédiaires survenant après réception de la demande pour distribution de la transmission multimédia, la demande arrivant au milieu du segment actuel.

7. Procédé de la revendication 1 comprenant en outre la réception d'une pluralité de transmissions multimédia;
le maintien d'une image actuelle de chacune de la pluralité de transmissions multimédia, le maintien de l'image actuelle de chacune de la pluralité de transmissions multimédia comprenant le décodage d'une trame actuelle de chacune des transmissions multimédia reçues;
la commande de l'une choisie de la pluralité de transmissions multimédia en réponse à la demande reçue, la commande de l'une choisie de la pluralité de transmissions multimédia étant effectuée par restitution de la trame actuelle correspondant à la transmission multimédia sélectionnée; et
la concaténation de la transmission multimédia commutée vers une transmission multimédia d'utilisateur existante sans perte de synchronisation sur le dispositif d'affichage d'utilisateur.

8. Procédé de la revendication 2 dans lequel la réorientation de la transmission multimédia comprend en outre:
la réception de la trame I et l'au moins une de la pluralité de trames P dans le segment actuel;
l'agrégation de la trame I et l'au moins une de la pluralité de trames P reçues depuis le segment actuel pour maintenir l'image actuelle correspondant à une trame actuelle;
la génération d'une image intermédiaire à partir de l'image actuelle; et
la réception de l'au moins une trame P décodée indicatrice de changements incrémentiels de la trame actuelle.

9. Procédé de la revendication 8 dans lequel la commutation de la transmission multimédia comprend en outre:
le calcul d'une trame d'affichage actuelle basé sur l'au moins une trame P décodée;
le calcul de changements entre la trame d'affichage actuelle calculée et l'image intermédiaire générée;
le codage de l'au moins une trame P décodée, l'au moins une trame P décodée étant opérationnelle pour restituer les images intermédiaires similaires à la trame actuelle; et
la transmission, après le codage, de l'au moins une trame P décodée à un dispositif d'utilisateur pour restitution, la restitution étant opérationnelle pour afficher l'image actuelle comprenant les trames agrégées dans le segment actuel.

10. Procédé de la revendication 2 dans lequel la réorientation de la transmission multimédia comprend en outre: la réception de la demande pour réorienter la transmission multimédia vers un utilisateur;
le calcul d'une trame actuelle indicatrice de la trame I et l'au moins une de la pluralité de trames P dans le segment actuel;
l'envoi immédiat de la trame actuelle calculée à l'utilisateur d'une manière transparente pour restitution sur un dispositif d'affichage d'utilisateur, la manière transparente étant opérationnelle pour conserver la synchronisation de l'image d'affichage avec la trame actuelle calculée;
la réception de l'au moins une trame P décodée;
le calcul, pour chacune de l'au moins une trame P décodée, de changements contenus dans celle-ci;
le calcul d'au moins une différence entre la trame actuelle calculée et les changements calculés; et
la transmission de l'au moins une différence au dispositif d'affichage d'utilisateur pour restitution sur le dispositif d'affichage d'utilisateur.

11. Procédé de commutation d'une transmission multimédia vers un utilisateur demandeur en réponse à une demande comprenant les étapes de:
réception d'une demande de commutation vidéo pendant un segment actuel après une trame I précédente sur la transmission multimédia fournissant du contenu demandé;
fourniture d'une trame I intermédiaire correspondant à la trame I précédente et une série de trames P successives reçues sur une transmission entrante, la fourniture de la trame I intermédiaire comprenant la génération de trames P pour le reste du segment actuel;
fourniture de trames P intermédiaires générées à partir de la série de trames P successives sur la transmission entrante;
décodage de la trame I intermédiaire et des trames P intermédiaires pour obtenir une pluralité de trames décodées;
maintien de la pluralité de trames décodées comme étant une image actuelle;
en réponse à la demande, codage de l'image actuelle pour obtenir une trame restituable;
orientation de la trame restituable vers l'utilisateur demandeur;
réorientation de la transmission multimédia vers l'utilisateur demandeur d'une manière en temps réel, la réorientation de la transmission multimédia comprenant:
l'agrégation de la trame I intermédiaire et des trames P intermédiaires pour maintenir l'image actuelle;
le décodage des trames agrégées pour générer la trame restituable;
la réception des trames P pour le reste du segment actuel;
le décodage des trames P pour le reste du segment actuel pour obtenir au moins une trame P décodée;
le calcul d'au moins une différence entre l'au moins une trame P décodée et la trame restituable; et
la génération des trames intermédiaires indicatrices de l'au moins une différence entre l'au moins une trame P décodée et la trame restituable; et
la fusion des trames intermédiaires avec la transmission entrante après réception d'une trame I successive sur la transmission entrante.

12. Portail vidéo comprenant:
un commutateur d'application opérationnel pour identifier une transmission multimédia ayant une pluralité de segments, la pluralité de segments comprenant un segment actuel et un segment suivant successif, chacun des segments étant défini par une séquence ordonnée de trames comprenant une trame I suivie par une pluralité de trames P;
une interface avec un dispositif d'utilisateur opérationnel pour recevoir une demande pour orienter la transmission multimédia identifiée vers un utilisateur demandeur, la demande étant reçue pendant le segment actuel dans la transmission multimédia;
un compositeur répondant à l'interface et opérationnel:
pour décoder la trame I et au moins l'une de la pluralité de trames P dans le segment actuel pour obtenir une pluralité de trames décodées, au moins une trame P non décodée restant dans le segment actuel;
pour maintenir la pluralité de trames décodées comme étant une image actuelle;
pour coder l'image actuelle pour obtenir une trame restituable;
pour orienter la trame restituable vers le dispositif d'utilisateur;
pour réorienter la transmission multimédia vers le dispositif d'utilisateur d'une manière en temps réel;
pour agréger la trame I et l'au moins une de la pluralité de trames P dans la transmission multimédia pour maintenir l'image actuelle;
pour décoder les trames agrégées pour générer la trame restituable;
pour recevoir l'au moins une trame P non décodée restant dans le segment actuel à partir de la transmission multimédia;
pour décoder l'au moins une trame P non décodée restant dans le segment actuel pour obtenir au moins une trame P décodée;
pour calculer au moins une différence entre l'au moins une trame P décodée et la trame restituable;
pour générer des trames intermédiaires indicatrices de l'au moins une différence entre l'au moins une trame P décodée et la trame restituable; et
un commutateur multimédia opérationnel pour concaténer les trames intermédiaires avec le segment suivant successif de la transmission multimédia.

13. Portail vidéo de la revendication 12 dans lequel le compositeur est en outre opérationnel:
pour commuter la transmission multimédia d'une manière qui conserve la synchronisation entre une image d'affichage existante à un dispositif d'affichage d'utilisateur et la transmission multimédia réorienté.

14. Portail vidéo de la revendication 13 dans lequel l'interface est couplée à un dispositif d'affichage d'utilisateur opérationnel pour restituer une image visuelle à partir d'une trame codée.

15. Portail vidéo de la revendication 12 dans lequel le compositeur comprend en outre:
l'image actuelle adaptée pour appliquer, après décodage, l'au moins une trame P décodée restant dans le segment actuel à une image restituable indicatrice d'un état d'affichage actuel de la transmission multimédia; et
un codeur opérationnel pour coder l'image restituable pour générer au moins une trame P indicatrice de changements entre l'image restituable et l'état d'affichage actuel.

16. Portail vidéo de la revendication 12 dans lequel le commutateur d'application est opérationnel pour recevoir une pluralité de transmissions multimédia à partir d'applications de service multimédia, le compositeur étant en outre opérationnel:
pour maintenir une image actuelle de chacune de la pluralité de transmissions multimédia, le maintien de l'image actuelle de chacune de la pluralité de transmissions multimédia comprenant le décodage d'une trame actuelle de chacune des transmissions multimédia reçues;
pour commuter l'une choisie de la pluralité de transmissions multimédia en réponse à la demande reçue, la commande de l'une choisie de la pluralité de transmissions multimédia étant effectuée par restitution de la trame actuelle correspondant à la transmission multimédia sélectionnée; et
pour commander le commutateur multimédia pour concaténer la transmission multimédia commutée vers une transmission multimédia d'utilisateur existante sans perte de synchronisation sur le dispositif d'affichage d'utilisateur.

17. Portail vidéo de la revendication 16 dans lequel le compositeur est en outre opérationnel, pour chacune des trames multimédia:
pour recevoir la trame I et l'au moins une de la pluralité de trames P dans le segment actuel;
pour agréger la trame I et l'au moins une de la pluralité de trames P reçues depuis le segment actuel pour maintenir l'image actuelle correspondant à une trame actuelle;
pour générer une image intermédiaire de l'image actuelle; et
pour recevoir l'au moins une trame P décodée indicatrice de changements incrémentiels de la trame actuelle.

18. Produit de programme informatique ayant un support lisible par ordinateur opérationnel pour stocker une logique de programme informatique incorporée dans le code de programme informatique codé sur celui-ci pour fournir des services vidéo comprenant:
un code de programme informatique pour recevoir une demande de commutation vidéo pendant un segment actuel après une trame I précédente sur le flux fournissant le contenu demandé;
un code de programme informatique pour commuter la transmission multimédia d'une manière qui conserve la synchronisation entre une image d'affichage existante à un dispositif d'affichage d'utilisateur et la transmission multimédia réorientée;
un code de programme informatique pour envoyer immédiatement la trame actuelle calculée à un utilisateur demandeur d'une manière transparente pour restitution sur un dispositif d'affichage d'utilisateur;
un code de programme informatique pour générer des trames I intermédiaires correspondant à la transmission multimédia commutée pour le reste du segment actuel, et des trames P intermédiaires complétant les trames I intermédiaires dans le segment actuel;
un code de programme informatique pour transmettre chacune des trames I intermédiaires correspondant à une trame I précédente et une série de trames P successives reçues sur une transmission entrante, et pour générer des trames P pour le reste du segment actuel;
un code de programme informatique pour fournir les trames P intermédiaires générées à partir de la série de trames P successives sur la transmission entrante;
un code de programme informatique pour décoder la trame I intermédiaire et les trames P intermédiaires pour obtenir une pluralité de trames décodées;
un code de programme informatique pour maintenir la pluralité de trames décodées en tant qu'image actuelle;
un code de programme informatique pour coder, en réponse à la demande de commutation vidéo, l'image actuelle pour obtenir une trame restituable;
un code de programme informatique pour orienter la trame restituable vers l'utilisateur demandeur;
un code de programme informatique pour réorienter la transmission multimédia vers l'utilisateur demandeur d'une manière en temps réel, le code de programme informatique pour réorienter la transmission multimédia comprenant:
un code de programme informatique pour agréger la trame I intermédiaire et les trames P intermédiaires pour maintenir l'image actuelle;
un code de programme informatique pour décoder les trames agrégées pour générer la trame restituable;
un code de programme informatique pour recevoir les trames P pour le reste du segment actuel;
un code de programme informatique pour décoder les trames P pour le reste du segment actuel pour obtenir au moins une trame P décodée;
un code de programme informatique pour calculer au moins une différence entre l'au moins une trame P décodée et la trame restituable;
un code de programme informatique pour générer des trames intermédiaires indicatrices de l'au moins une différence entre l'au moins une trame P décodée et la trame restituable; et
un code de programme informatique pour fusionner les trames intermédiaires avec la transmission entrante après réception d'une trame I successive sur la transmission entrante.

19. Dispositif de communications personnelles à fonctionnalité vidéo répondant à une demande d'utilisateur pour commuter une transmission multimédia comprenant:
des moyens pour identifier une transmission multimédia ayant une pluralité de segments, la pluralité de segments comprenant un segment actuel et un segment suivant successif, chacun des segments étant défini par une séquence ordonnée de trames comprenant une trame I suivie par une pluralité de trames P;
des moyens pour recevoir une demande pour orienter la transmission multimédia identifiée depuis un processeur de contenu vers un utilisateur demandeur, la demande étant reçue pendant le segment actuel;
des moyens pour décoder la trame I et au moins l'une de la pluralité de trames P dans le segment actuel pour obtenir une pluralité de trames décodées, au moins une trame P non décodé restant dans le segment actuel;
des moyens pour maintenir la pluralité de trames décodées comme étant une image actuelle;
des moyens pour coder l'image actuelle pour obtenir une trame restituable;
des moyens pour orienter la trame restituable vers l'utilisateur demandeur;
des moyens pour réorienter la transmission multimédia vers l'utilisateur demandeur d'une manière en temps réel, les moyens pour réorienter la transmission multimédia comprenant:
des moyens pour agréger la trame I intermédiaire et les trames P intermédiaires pour maintenir l'image actuelle;
des moyens pour décoder les trames agrégées pour générer la trame restituable;
des moyens pour recevoir les trames P pour le reste du segment actuel;
des moyens pour décoder les trames P pour le reste du segment actuel pour obtenir au moins une trame P décodée;
des moyens pour calculer au moins une différence entre l'au moins une trame P décodée et la trame restituable; et
des moyens pour générer des trames intermédiaires indicatrices de l'au moins une différence entre l'au moins une trame P décodée et la trame restituable; et
des moyens pour concaténer les trames intermédiaires avec le segment suivant de la transmission multimédia.
